# EUROPEAN PATENT APPLICATION

(11) **EP 4 418 698 A1**
(43) Date of publication of application: **21.08.2024**
(21) Application number: 22880284.9
(22) Date of filing: 11.10.2022
(51) Int. Cl.: H04W 4/16

(54) **CALL PROCESSING METHOD AND APPARATUS, ELECTRONIC DEVICE, AND STORAGE MEDIUM**

(30) Priority: 14.10.2021 CN 202111199713
(71) Applicant: Vivo Mobile Communication Co., Ltd., Dongguan, Guangdong 523863 (CN)
(72) Inventor: WANG, Gang, Dongguan, Guangdong 523863 (CN)
(74) Representative: Murgitroyd & Company
(86) International application number: PCT/CN2022/124493
(87) International publication number: WO 2023/061347

(57) **Abstract**

This application discloses a call processing method and apparatus, an electronic device, and a storage medium, and belongs to the field of communication technologies. The method includes: determining, according to a type of the electronic device in a voice call, a call exception handling policy corresponding to the type of the electronic device, if a voice bearer establishing command sent by a network device is received in a case that a tracking area update acceptance message sent by the network device is not received, where the type includes a type of a calling terminal device and a type of a called terminal device; establishing a target voice bearer between the electronic device and the network device according to the call exception handling policy, where the target voice bearer is established based on a tracking area in which the electronic device is currently located; and performing a voice call on the target voice bearer.

## Description

### CROSS-REFERENCE TO RELATED APPLICATIONS

This application claims priority to Chinese Patent Application No. 202111199713.1, filed with the China National Intellectual Property Administration on October 14, 2021 and entitled "CALL PROCESSING METHOD AND APPARATUS, ELECTRONIC DEVICE, AND STORAGE MEDIUM", which is incorporated herein by reference in its entirety.

### TECHNICAL FIELD

This application belongs to the field of communication technologies, and specifically relates to a call processing method and apparatus, an electronic device, and a storage medium.

### BACKGROUND

In modem communication network architectures, mobile communication networks occupy an important position, and most wireless communication scenarios need to consider user mobility scenarios. When an electronic device is in a mobile state, the electronic device may move from one cell to another. To guarantee that a network device can still track a status of the electronic device when the electronic device moves, the electronic device sends a tracking area update (TAU, TrackingAreaUpdate) message to the network device to request an update of a tracking area (TA, TrackingArea), and the network device updates the tracking area for the electronic device after receiving a TAU request from the electronic device.

In a scenario of a voice over long-term evolution (VoLTE, Voice over Long-Term Evolution) call, in the related art, if the network device delivers a command to the electronic device to establish a voice bearer when the TAU process is not completed, and after the electronic device receives the command, the voice bearer that the network device delivers to establish is based on an old tracking area and the electronic device has entered a new tracking area, the electronic device considers the voice bearer delivered by the network device to be invalid, thereby resulting in a failure of establishment of a voice call and a low

VoLTE call through rate.

### SUMMARY

An objective of embodiments of this application is to provide a call processing method and apparatus, an electronic device, and a storage medium, to resolve a problem of a low VoLTE call through rate in the related art.

According to a first aspect, an embodiment of this application provides a call processing method, applied to an electronic device. The method includes:
determining, according to a type of the electronic device in a voice call, a call exception handling policy corresponding to the type of the electronic device, if a voice bearer establishing command sent by a network device is received in a case that a tracking area update acceptance message sent by the network device is not received, where the type includes a type of a calling terminal device and a type of a called terminal device;
establishing a target voice bearer between the electronic device and the network device according to the call exception handling policy, where the target voice bearer is established based on a tracking area in which the electronic device is currently located; and
performing a voice call on the target voice bearer.

According to a second aspect, an embodiment of this application provides a call processing apparatus, used in an electronic device. The apparatus includes:
a determining module, configured to determine, according to a type of the electronic device in a voice call, a call exception handling policy corresponding to the type of the electronic device, if a voice bearer establishing command sent by a network device is received in a case that a tracking area update acceptance message sent by the network device is not received, where the type includes a type of a calling terminal device and a type of a called terminal device;
an establishing module, configured to establish a target voice bearer between the electronic device and the network device according to the call exception handling policy, where the target voice bearer is established based on a tracking area in which the electronic device is currently located; and
a call module, configured to perform a voice call on the target voice bearer.

According to a third aspect, an embodiment of this application provides an electronic device. The electronic device includes a processor, a memory, and a program or an instruction stored in the memory and executable on the processor. When the program or the instruction is executed by the processor, the steps of the method according to the first aspect are implemented.

According to a fourth aspect, an embodiment of this application provides a readable storage medium. The readable storage medium stores a program or an instruction. When the program or the instruction is executed by a processor, the steps of the method according to the first aspect are implemented.

According to a fifth aspect, an embodiment of this application provides a chip. The chip includes a processor and a communication interface, the communication interface is coupled to the processor, and the processor is configured to run a program or an instruction, to implement the method according to the first aspect.

In the embodiments of this application, in a case that the tracking area update acceptance message sent by the network device is not received, if the voice bearer establishing command sent by the network device is received, the call exception handling policy corresponding to the type of the electronic device is determined according to the type of the electronic device in the voice call, and the target voice bearer between the electronic device and the network device is established according to the call exception handling policy, where the target voice bearer is established based on the tracking area in which the electronic device is currently located; and the voice call is performed on the target voice bearer. Compared with the related art, for a problem of a VoLTE call exception caused by a network TAU exception, in the embodiments of this application, a calling terminal network and a called terminal network may be considered, and different processing policies are adopted for exceptional behavior of network TAUs of different terminals, to generate a new voice bearer that includes information about a tracking area in which the electronic device is currently located. Because tracking area information included in the voice bearer is consistent with the information about the tracking area in which the electronic device is currently located, the electronic device can perform a normal voice call on the voice bearer, and the VoLTE call through rate can be improved.

### BRIEF DESCRIPTION OF THE DRAWINGS

FIG. 1 is a flowchart of a call processing method according to an embodiment of this application;
FIG. 2 is a diagram of a first example of a call procedure when an electronic device is used as a calling terminal device according to an embodiment of this application;
FIG. 3 is a diagram of a second example of a call procedure when an electronic device is used as a calling terminal device according to an embodiment of this application;
FIG. 4 is a diagram of an example of a call procedure when an electronic device is used as a called terminal device according to an embodiment of this application;
FIG. 5 is a structural block diagram of a call processing apparatus according to an embodiment of this application;
FIG. 6 is a schematic structural diagram of an electronic device according to an embodiment of this application; and
FIG. 7 is a schematic diagram of a hardware structure of an electronic device implementing embodiments of this application.

### DETAILED DESCRIPTION

The following clearly describes technical solutions in embodiments of this application with reference to accompanying drawings in the embodiments of this application. Apparently, the described embodiments are some of the embodiments of this application rather than all of the embodiments. All other embodiments obtained by a person of ordinary skill in the art based on the embodiments of this application shall fall within the protection scope of this application.

In the specification and claims of this application, terms "first", "second", and the like are used to distinguish similar objects, but do not indicate a particular sequence or order. It may be understood that the data used in such a way is interchangeable in proper circumstances, so that the embodiments of this application described herein can be implemented in other sequences than the sequence illustrated or described herein. The objects distinguished by "first", "second", and the like are usually of one type, and a number of objects is not limited, for example, a first object may be one or more than one object. In addition, "and/or" in the specification and claims indicates at least one of connected objects, and a character "/" generally indicates that the connected objects are in an "or" relationship.

During establishment of a call, since signaling between an electronic device and a network device does not necessarily reach according to sending time of the signaling, there may be a situation where a new signaling message has arrived before a previous signaling procedure is completed. For some service procedures, such signaling that does not reach in sequence affects establishment of a service. During a call, if the network device delivers a command for voice bearer establishment before a TAU procedure is completed, the electronic device considers a bearer delivered by the network device to be invalid, which results in a call failure.

To resolve the foregoing technical problems, the embodiments of this application provide a call processing method and apparatus, an electronic device, and a storage medium.

The call processing method provided in the embodiments of this application is described below in detail through specific embodiments and application scenarios thereof with reference to the accompanying drawings.

It should be noted that the call processing method provided in the embodiments of this application is applicable to an electronic device. In actual application, the electronic device may include: a mobile terminal such as a smart phone, a tablet computer, and a personal digital assistant, which is not limited in the embodiments of this application.

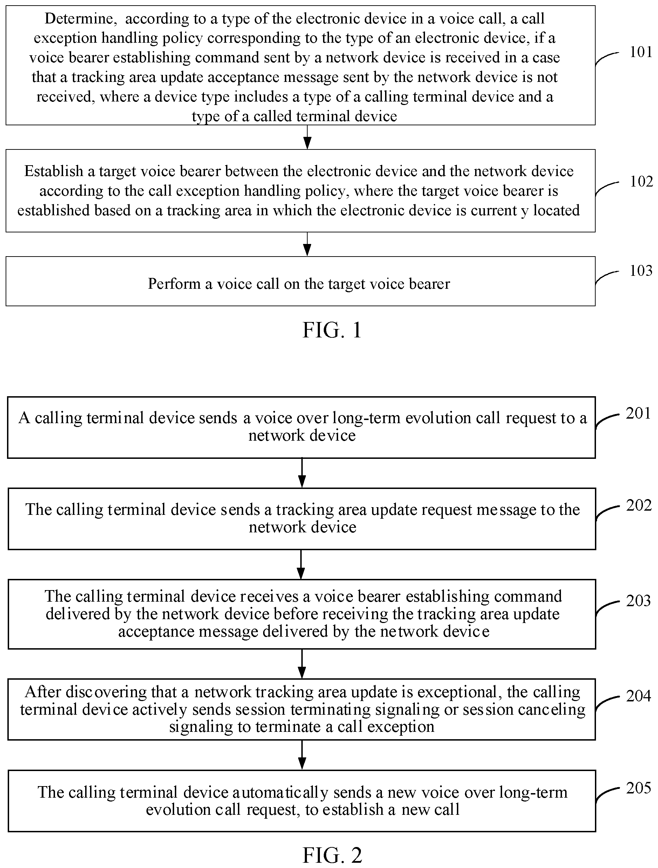

FIG. 1 is a flowchart of a call processing method according to an embodiment of this application. As shown in FIG. 1, the method may include the following steps: step 101, step 102, and step 103.

In step 101, according to a type of the electronic device in a voice call, a call exception handling policy corresponding to the type of the electronic device is determined, if a voice bearer establishing command sent by a network device is received in a case that a tracking area update acceptance message sent by the network device is not received, where the type includes a type of a calling terminal device and a type of a called terminal device.

In a case that the voice bearer establishing command sent by the network device reaches the electronic device before the tracking area update acceptance message, compared with a solution in the related art in which an electronic device end does not perform any processing and a call fails when a network TAU is exceptional, in the embodiments of this application, a solution that avoids the network TAU exception and improves a VoLTE through rate can be provided for two scenarios in which a network TAU of a calling terminal is exceptional and in which a network TAU of a called terminal is exceptional.

In this embodiment of this application, when the electronic device is a calling terminal device, the call exception handling policy may include the following two policies: Policy 1: The electronic device actively terminates an exceptional voice call, and automatically sends a new VoLTE call request, to establish a new call. Policy 2: The electronic device renegotiates a voice bearer between the electronic device and the network device, and may continue a voice call procedure after a new voice bearer is negotiated.

In this embodiment of this application, when the electronic device is a called terminal device, the call exception handling policy may include the following policy: The electronic device renegotiates a voice bearer between the electronic device and the network device, and may continue a voice call procedure after a new voice bearer is negotiated.

In step 102, a target voice bearer between the electronic device and the network device is established according to the call exception handling policy, where the target voice bearer is established based on a tracking area in which the electronic device is currently located.

In an implementation provided in this application, the electronic device is a calling terminal device, and step 102 may specifically include the following steps (not shown in the figure): step 1021, step 1022, and step 1023.

In step 1021, a current exceptional voice call is terminated.

In this embodiment of this application, when the network TAU is exceptional, the electronic device may terminate the current exceptional voice call by sending session terminating (Bye) signaling to the network device; or the electronic device may terminate the current exceptional voice call by sending session canceling (Cancel) signaling to the network device.

In step 1022, a new call request is sent to the network device until the tracking area update acceptance message sent by the network device is received.

In this embodiment of this application, the new call request is automatically sent to the network device after the current exceptional voice call is terminated, to establish a new call.

In step 1023, the target voice bearer between the electronic device and the network device is established after the tracking area update acceptance message is received.

In this embodiment of this application, if the network device returns the tracking area update acceptance message after the electronic device sends the new call request, it is determined that the network TAU is restored. In this case, the electronic device can perform a normal voice call.

In this embodiment of this application, if the network device still does not return the tracking area update acceptance message after the electronic device sends the new call request, it is determined that the network TAU is still exceptional. In this case, step 1021 and step 1022 are repeatedly performed, until the network device returns the tracking area update acceptance message. When the tracking area update acceptance message is received, it indicates that the network TAU is restored, and in this case, the electronic device can perform a normal voice call.

In another implementation provided in this application, the electronic device is a calling terminal device or a called terminal device, and step 102 may specifically include the following steps (not shown in the figure): step 1024 and step 1025.

In step 1024, a bearer negotiation request is sent to the network device, where the bearer negotiation request includes information about a target tracking area in which the electronic device is currently located, and the information about the target tracking area is used for the network device to update tracking area information in the voice bearer establishing command.

In this embodiment of this application, when the network TAU is exceptional, the bearer negotiation request is sent to the network device, to request the network device to update the tracking area information in the voice bearer establishing command into information about the tracking area in which the electronic device is currently located.

In this embodiment of this application, according to protocol TS24.301 Chapter 6.5.3.2, the electronic device may renegotiate the voice bearer between the electronic device and the network device by sending bearer resource allocation (BEARER RESOURCE ALLOCATION REQUEST) signaling to the network device; or the electronic device may renegotiate the voice bearer between the electronic device and the network device by sending evolved packet system bearer context modification (MODIFY EPS BEARER CONTEXT REQUEST) signaling to the network device.

In step 1025, the target voice bearer between the electronic device and the network device is established after an updated voice bearer establishing command sent by the network device is received.

In this embodiment of this application, because the updated voice bearer establishing command is established based on the tracking area in which the electronic device is currently located, the electronic device considers the voice bear established according to the command to be valid, and a normal voice call can be performed on the voice bearer.

In still another implementation provided in this application, the electronic device is a calling terminal device, and step 102 may specifically include the following steps (not shown in the figure): step 1026, step 1027, and step 1028.

In step 1026, a current exceptional voice call is terminated.

In step 1027, a new call request is sent to the network device, and if the tracking area update acceptance message sent by the network device is not received in preset duration, a bearer negotiation request is sent to the network device.

In step 1028, the target voice bearer between the electronic device and the network device is established after an updated voice bearer establishing command sent by the network device is received.

In this embodiment of this application, if time for waiting for the network device to send the tracking area update acceptance message is too long, the voice bearer between the electronic device and the network device may be renegotiated by sending the bearer negotiation request to the network device, to improve a call restoring speed.

In step 103, a voice call is performed on the target voice bearer.

For ease of understanding, processing policies for a network TAU exception of the calling terminal and a network TAU exception of the called terminal are described with reference to diagrams of examples shown in FIG. 2 to FIG. 4.

In an example, as shown in FIG. 2, FIG. 2 is a diagram of a first example of a call procedure when an electronic device is used as a calling terminal device, which may include the following steps: step 201, step 202, step 203, step 204, and step 205.

In step 201, the calling terminal device sends a voice over long-term evolution call request to the network device.

In step 202, the calling terminal device sends a tracking area update request message to the network device.

In step 203, the calling terminal device receives the voice bearer establishing command delivered by the network device before receiving the tracking area update acceptance message delivered by the network device.

In step 204, after discovering that a network tracking area update is exceptional, the calling terminal device actively sends session terminating signaling or session canceling signaling to terminate a call exception.

In step 205, the calling terminal device automatically sends a new voice over long-term evolution call request, to establish a new call.

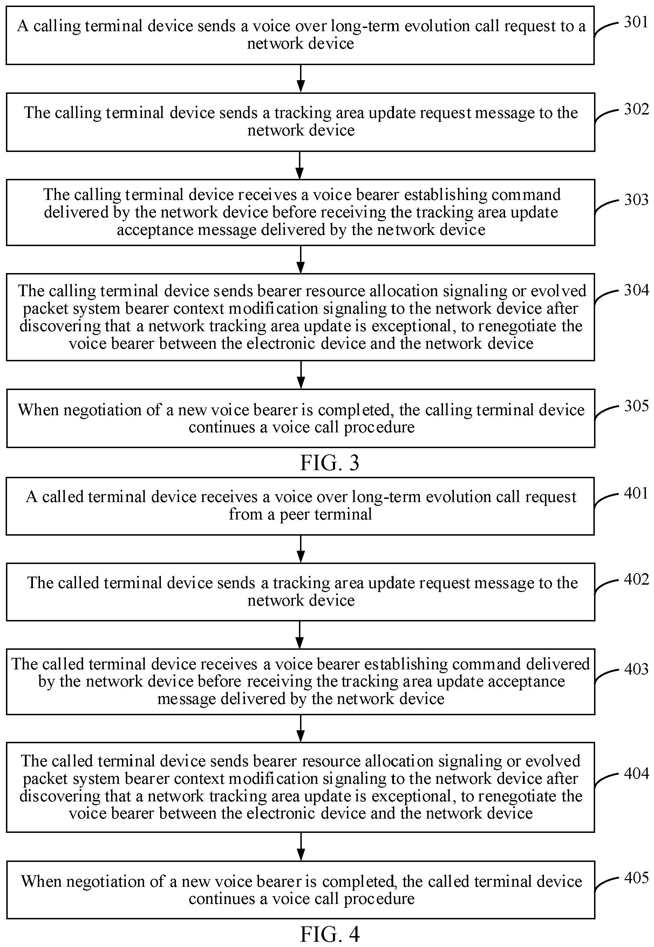

In another example, as shown in FIG. 3, FIG. 3 is a diagram of a second example of a call procedure when an electronic device is used as a calling terminal device, which may include the following steps: step 301, step 302, step 303, step 304, and step 305.

In step 301, the calling terminal device sends the voice over long-term evolution call request to the network device.

In step 302, the calling terminal device sends the tracking area update request message to the network device.

In step 303, the calling terminal device receives the voice bearer establishing command delivered by the network device before receiving the tracking area update acceptance message delivered by the network device.

In step 304, the calling terminal device sends bearer resource allocation signaling or evolved packet system bearer context modification signaling to the network device after discovering that the network tracking area update is exceptional, to renegotiate the voice bearer between the electronic device and the network device.

In step 305, when negotiation of the new voice bearer is completed, the calling terminal device continues the voice call procedure.

In another example, as shown in FIG. 4, FIG. 4 is a diagram of an example of a call procedure when an electronic device is used as a called terminal device, which may include the following steps: step 401, step 402, step 403, step 404, and step 405.

In step 401, the called terminal device receives a voice over long-term evolution call request from a peer terminal.

In step 402, the called terminal device sends a tracking area update request message to the network device.

In step 403, the called terminal device receives the voice bearer establishing command delivered by the network device before receiving the tracking area update acceptance message delivered by the network device.

In step 404, the called terminal device sends bearer resource allocation signaling or evolved packet system bearer context modification signaling to the network device after discovering that the network tracking area update is exceptional, to renegotiate the voice bearer between the electronic device and the network device.

In step 405, when negotiation of the new voice bearer is completed, the called terminal device continues the voice call procedure.

It may be learned from the foregoing embodiments that, in this embodiment, in a case that the tracking area update acceptance message sent by the network device is not received, if the voice bearer establishing command sent by the network device is received, the call exception handling policy corresponding to the type of the electronic device is determined according to the type of the electronic device in the voice call, and the target voice bearer between the electronic device and the network device is established according to the call exception handling policy, where the target voice bearer is established based on the tracking area in which the electronic device is currently located; and the voice call is performed on the target voice bearer. Compared with the related art, for a problem of a VoLTE call exception caused by a network TAU exception, in the embodiments of this application, a calling terminal network and a called terminal network may be considered, and different processing policies are adopted for exceptional behavior of network TAUs of different terminals, to generate a new voice bearer that includes information about a tracking area in which the electronic device is currently located. Because tracking area information included in the voice bearer is consistent with the information about the tracking area in which the electronic device is currently located, the electronic device can perform a normal voice call on the voice bearer, and the VoLTE call through rate can be improved.

It should be noted that the call processing method provided in the embodiments of this application may be performed by a call processing apparatus, or a control module configured to perform and load the call processing method in the call processing apparatus. This embodiment of this application describes a call processing apparatus provided in the embodiments of this application by using an example in which the call processing apparatus performs and loads the call processing method.

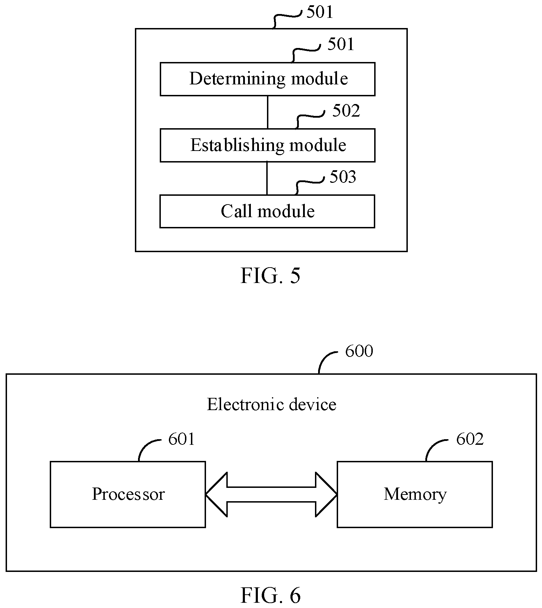

FIG. 5 is a structural block diagram of a call processing apparatus according to an embodiment of this application, and the call processing apparatus is used in an electronic device. As shown in FIG. 5, a call processing apparatus 500 may include: a determining module 501, an establishing module 502, and a call module 503.

The determining module 501 is configured to determine, according to a type of the electronic device in a voice call, a call exception handling policy corresponding to the type of the electronic device, if a voice bearer establishing command sent by a network device is received in a case that a tracking area update acceptance message sent by the network device is not received, where the type includes a type of a calling terminal device and a type of a called terminal device.

The establishing module 502 is configured to establish a target voice bearer between the electronic device and the network device according to the call exception handling policy, where the target voice bearer is established based on a tracking area in which the electronic device is currently located.

The call module 503 is configured to perform a voice call on the target voice bearer.

It may be learned from the foregoing embodiments that, in this embodiment, in a case that the tracking area update acceptance message sent by the network device is not received, if the voice bearer establishing command sent by the network device is received, the call exception handling policy corresponding to the type of the electronic device is determined according to the type of the electronic device in the voice call, and the target voice bearer between the electronic device and the network device is established according to the call exception handling policy, where the target voice bearer is established based on the tracking area in which the electronic device is currently located; and the voice call is performed on the target voice bearer. Compared with the related art, for a problem of a VoLTE call exception caused by a network TAU exception, in the embodiments of this application, a calling terminal network and a called terminal network may be considered, and different processing policies are adopted for exceptional behavior of network TAUs of different terminals, to generate a new voice bearer that includes information about a tracking area in which the electronic device is currently located. Because tracking area information included in the voice bearer is consistent with the information about the tracking area in which the electronic device is currently located, the electronic device can perform a normal voice call on the voice bearer, and the VoLTE call through rate can be improved.

Optionally, in an embodiment, the electronic device is a calling terminal device, and the establishing module 502 may include:
a first terminating sub-module, configured to terminate a current exceptional voice call;
a first sending sub-module, configured to send a new call request to the network device until the tracking area update acceptance message sent by the network device is received; and
a first establishing sub-module, configured to establish the target voice bearer between the electronic device and the network device after the tracking area update acceptance message is received.

Optionally, in an embodiment, the electronic device is a calling terminal device or a called terminal device, and the establishing module 502 may include:
a second sending sub-module, configured to send a bearer negotiation request to the network device, where the bearer negotiation request includes information about a target tracking area in which the electronic device is currently located, and the information about the target tracking area is used for the network device to update tracking area information in the voice bearer establishing command; and
a second establishing sub-module, configured to establish the target voice bearer between the electronic device and the network device after an updated voice bearer establishing command sent by the network device is received.

Optionally, in an embodiment, the electronic device is a calling terminal device, and the establishing module 502 may include:
a second terminating sub-module, configured to terminate a current exceptional voice call;
a third sending sub-module, configured to send a new call request to the network device, and send a bearer negotiation request to the network device if the tracking area update acceptance message sent by the network device is not received in preset duration; and
a third establishing sub-module, configured to establish the target voice bearer between the electronic device and the network device after an updated voice bearer establishing command sent by the network device is received.

The call processing apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a notebook computer, a palm computer, an in-vehicle electronic device, a wearable device, an ultra-mobile personal computer (ultra-mobile personal computer, UMPC), a netbook, a personal digital assistant (personal digital assistant, PDA), or the like, and the non-mobile electronic device may be a server, a network attached storage (network attached storage, NAS), a personal computer (personal computer, PC), a television (television, TV), a teller machine, an automated machine, or the like, which are not specifically limited in this embodiment of this application.

The call processing apparatus in this embodiment of this application may be an apparatus having an operating system. The operating system may be an Android (Android) operating system, may be an ios operating system, or may be another possible operating system, which is not specifically limited in this embodiment of this application.

The call processing apparatus provided in this embodiment of this application can implement processes implemented in the method embodiment of FIG. 1, and to avoid repetition, details are not described herein again.

Optionally, as shown in FIG. 6, an embodiment of this application further provides an electronic device 600, including a processor 601, a memory 602, and a program or an instruction stored in the memory 602 and executable on the processor 601. When the program or the instruction is executed by the processor 601, the processes of embodiments of the call processing method are implemented, and the same technical effect can be achieved. To avoid repetition, details are not described herein again.

It should be noted that the electronic device in this embodiment of this application includes the foregoing mobile electronic device and non-mobile electronic device.

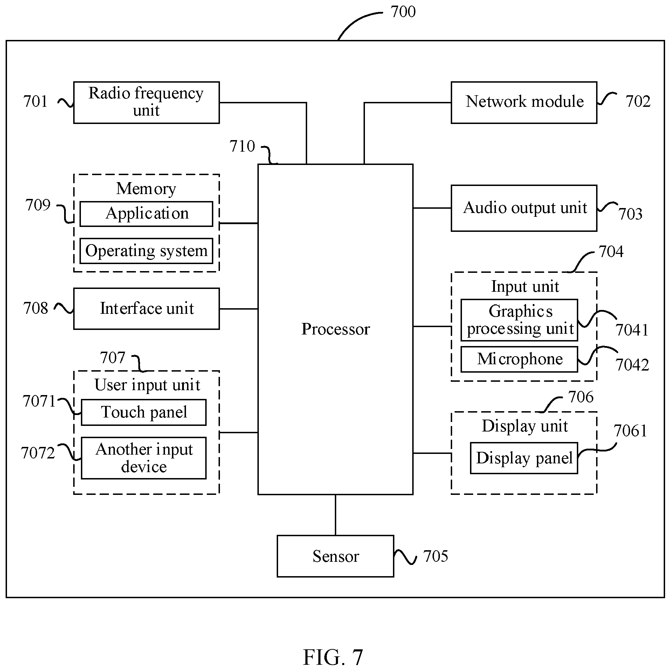

FIG. 7 is a schematic diagram of a hardware structure of an electronic device implementing embodiments of this application.

The electronic device 700 includes, but is not limited to, components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the electronic device 700 may further include a power supply (such as a battery) for supplying power to the components. The power supply may be logically connected to the processor 710 by using a power management system, thereby implementing functions, such as charging, discharging, and power consumption management, by using the power management system. The structure of the electronic device shown in FIG. 7 constitutes no limitation on the electronic device, and the electronic device may include more or fewer components than those shown in the figure, or some components may be combined, or a different component deployment may be used, which is not described herein again.

The processing unit 710 is configured to determine, according to a type of the electronic device in a voice call, a call exception handling policy corresponding to the type of the electronic device, if a voice bearer establishing command sent by a network device is received in a case that a tracking area update acceptance message sent by the network device is not received, where the type includes a type of a calling terminal device and a type of a called terminal device; establish a target voice bearer between the electronic device and the network device according to the call exception handling policy, where the target voice bearer is established based on a tracking area in which the electronic device is currently located; and perform a voice call on the target voice bearer.

It may be learned that in the embodiments of this application, for a problem of a VoLTE call exception caused by a network TAU exception, in the embodiments of this application, a calling terminal network and a called terminal network may be considered, and different processing policies are adopted for exceptional behavior of network TAUs of different terminals, to generate a new voice bearer that includes information about a tracking area in which the electronic device is currently located. Because tracking area information included in the voice bearer is consistent with the information about the tracking area in which the electronic device is currently located, the electronic device can perform a normal voice call on the voice bearer, and the VoLTE call through rate can be improved.

Optionally, in an embodiment, the electronic device is a calling terminal device, and the processor 710 is further configured to terminate the current exceptional voice call; send a new call request to the network device until the tracking area update acceptance message sent by the network device is received; and establish the target voice bearer between the electronic device and the network device after the tracking area update acceptance message is received.

Optionally, in an embodiment, the electronic device is a calling terminal device or a called terminal device, and the processor 710 is further configured to send a bearer negotiation request to the network device, where the bearer negotiation request includes information about a target tracking area in which the electronic device is currently located, and the information about the target tracking area is used for the network device to update tracking area information in the voice bearer establishing command; and establish the target voice bearer between the electronic device and the network device after an updated voice bearer establishing command sent by the network device is received.

Optionally, in an embodiment, the electronic device is a calling terminal device, and the processor 710 is further configured to terminate the current exceptional voice call; send a new call request to the network device, and send a bearer negotiation request to the network device if the tracking area update acceptance message sent by the network device is not received in preset duration; and establish the target voice bearer between the electronic device and the network device after an updated voice bearer establishing command sent by the network device is received.

It should be noted that in this embodiment of this application, the input unit 704 may include a graphics processing unit (Graphics Processing Unit, GPU) 7041 and a microphone 7042. The graphics processing unit 7041 performs processing on image data of a static picture or a video that is obtained by an image acquisition device (for example, a camera) in a video acquisition mode or an image acquisition mode. The display unit 706 may include a display panel 7061, and the display panel 7061 may be configured by using a liquid crystal display, organic light-emitting diode, or the like. The user input unit 707 includes a touch panel 7071 and another input device 7072. The touch panel 7071 is also referred to as a touch screen. The touch panel 7071 may include two parts: a touch detection apparatus and a touch controller. The another input device 7072 may include, but is not limited to, a physical keyboard, a functional key (such as a volume control key or a switch key), a track ball, a mouse, and a joystick, which are not described herein again. The memory 709 may be configured to store a software program and various data, which includes, but is not limited to, an application and an operating system. The processor 710 may integrate an application processor and a modem. The application processor mainly processes an operating system, a user interface, an application, and the like. The modem mainly processes wireless communication. It may be understood that, the modem may alternatively not be integrated in the processor 710.

An embodiment of this application further provides a readable storage medium. The readable storage medium stores a program or an instruction. When the program or the instruction is executed by a processor, the processes of embodiments of the call processing method are implemented, and the same technical effects can be achieved. To avoid repetition, details are not described herein again.

The processor is the processor in the electronic device in the foregoing embodiment. The readable storage medium includes a computer-readable storage medium, such as a computer read-only memory (read-only memory, ROM), a random access memory (random access memory, RAM), a magnetic disk, an optical disc, or the like.

An embodiment of this application further provides a chip. The chip includes a processor and a communication interface. The communication interface is coupled to the processor. The processor is configured to run a program or an instruction, to implement processes of embodiments of the call processing method, and the same technical effects can be achieved. To avoid repetition, details are not described herein again.

It should be understood that the chip provided in this embodiment of this application may also be referred to as a system-level chip, a system chip, a chip system, a system on chip, or the like.

It should be noted that terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the method and apparatus in the embodiments of this application is not limited to performing the functions in the order shown or discussed, but may also include performing the functions in a substantially simultaneous manner or in reverse order according to the functions involved, for example, the described method may be performed in a different order than described, and various steps may be added, omitted, or combined. In addition, features described with reference to some examples may be combined in other examples.

Through the descriptions of the foregoing implementations, a person skilled in the art may clearly understand that the method in the foregoing embodiments may be implemented by using software and a necessary general hardware platform, and certainly, may alternatively be implemented by hardware, but in many cases, the former manner is a better implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, a network device, or the like) to perform the methods described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A call processing method, applied to an electronic device, the method comprising:
determining, according to a type of the electronic device in a voice call, a call exception handling policy corresponding to the type of the electronic device, if a voice bearer establishing command sent by a network device is received in a case that a tracking area update acceptance message sent by the network device is not received, wherein the type comprises a type of a calling terminal device and a type pf a called terminal device;
establishing a target voice bearer between the electronic device and the network device according to the call exception handling policy, wherein the target voice bearer is established based on a tracking area in which the electronic device is currently located; and
performing a voice call on the target voice bearer.

2. The method according to claim 1, wherein the electronic device is the calling terminal device, and the establishing a target voice bearer between the electronic device and the network device according to the call exception handling policy comprises:
terminating a current exceptional voice call;
sending a new call request to the network device until the tracking area update acceptance message sent by the network device is received; and
establishing the target voice bearer between the electronic device and the network device after the tracking area update acceptance message is received.

3. The method according to claim 1, wherein the electronic device is the calling terminal device or the called terminal device, and the establishing a target voice bearer between the electronic device and the network device according to the call exception handling policy comprises:
sending a bearer negotiation request to the network device, wherein the bearer negotiation request comprises information about a target tracking area in which the electronic device is currently located, and the information about the target tracking area is used for the network device to update tracking area information in the voice bearer establishing command; and
establishing the target voice bearer between the electronic device and the network device after an updated voice bearer establishing command sent by the network device is received.

4. The method according to claim 1, wherein the electronic device is the calling terminal device, and the establishing a target voice bearer between the electronic device and the network device according to the call exception handling policy comprises:
terminating a current exceptional voice call;
sending a new call request to the network device, and sending a bearer negotiation request to the network device if the tracking area update acceptance message sent by the network device is not received in preset duration; and
establishing the target voice bearer between the electronic device and the network device after an updated voice bearer establishing command sent by the network device is received.

5. A call processing apparatus, used in an electronic device, the apparatus comprising:
a determining module, configured to determine, according to a type of the electronic device in a voice call, a call exception handling policy corresponding to the type of the electronic device, if a voice bearer establishing command sent by a network device is received in a case that a tracking area update acceptance message sent by the network device is not received, wherein the type comprises a type of a calling terminal device and a type of a called terminal device;
an establishing module, configured to establish a target voice bearer between the electronic device and the network device according to the call exception handling policy, wherein the target voice bearer is established based on a tracking area in which the electronic device is currently located; and
a call module, configured to perform a voice call on the target voice bearer.

6. The apparatus according to claim 5, wherein the electronic device is the calling terminal device, and the establishing module comprises:
a first terminating sub-module, configured to terminate a current exceptional voice call;
a first sending sub-module, configured to send a new call request to the network device until the tracking area update acceptance message sent by the network device is received; and
a first establishing sub-module, configured to establish the target voice bearer between the electronic device and the network device after the tracking area update acceptance message is received.

7. The apparatus according to claim 5, wherein the electronic device is the calling terminal device or the called terminal device, and the establishing module comprises:
a second sending sub-module, configured to send a bearer negotiation request to the network device, wherein the bearer negotiation request comprises information about a target tracking area in which the electronic device is currently located, and the information about the target tracking area is used for the network device to update tracking area information in the voice bearer establishing command; and
a second establishing sub-module, configured to establish the target voice bearer between the electronic device and the network device after an updated voice bearer establishing command sent by the network device is received.

8. The apparatus according to claim 5, wherein the electronic device is the calling terminal device, and the establishing module comprises:
a second terminating sub-module, configured to terminate a current exceptional voice call;
a third sending sub-module, configured to send a new call request to the network device, and send a bearer negotiation request to the network device if the tracking area update acceptance message sent by the network device is not received in preset duration; and
a third establishing sub-module, configured to establish the target voice bearer between the electronic device and the network device after an updated voice bearer establishing command sent by the network device is received.

9. An electronic device, comprising a processor, a memory, and a program or an instruction stored in the memory and executable on the processor, wherein when the program or the instruction is executed by the processor, the steps of the call processing method according to any one of claims 1 to 4 are implemented.

10. A readable storage medium, storing a program or an instruction, wherein when the program or the instruction is executed by a processor, the steps of the call processing method according to any one of claims 1 to 4 are implemented.

11. A chip, wherein the chip comprises a processor and a communication interface, the communication interface is coupled to the processor, and the processor is configured to run a program or an instruction, to implement the call processing method according to any one of claims 1 to 4.
